# EUROPEAN PATENT APPLICATION

(11) **EP 3 246 899 A1**
(43) Date of publication of application: **22.11.2017**
(21) Application number: 15877838.1
(22) Date of filing: 15.01.2015
(51) Int. Cl.: G09C 1/00, H04L 9/10

(54) **RANDOM NUMBER EXPANDING DEVICE, RANDOM NUMBER EXPANDING METHOD, AND RANDOM NUMBER EXPANDING PROGRAM**

(71) Applicant: Mitsubishi Electric Corporation, Chiyoda-ku Tokyo 100-8310 (JP)
(72) Inventor: SUGAWARA, Takeshi, Tokyo 100-8310 (JP)
(74) Representative: Pfenning, Meinig & Partner mbB
(86) International application number: PCT/JP2015/050979
(87) International publication number: WO 2016/113886

(57) **Abstract**

A random number expanding device (100) includes an expanding unit (120) that expands a random number r_{(M)} to an N bits random number s_{(N)} using a logical operation that is obtained by multiplication of one matrix of a check matrix with a size of M × N and a generator matrix with a size of M × N which are determined from an (N, N-M, D) linear code for error correction by a vector in a case in which the random number r_{(M)} is the vector with M components, the multiplication being performed through addition based on an exclusive OR. Since the random number expanding device (100) includes the expanding unit (120), it is possible to reduce the bit numbers of random numbers to be used, and counter an irradiation attack with multiple laser beams.

## Description

### Technical Field

The present invention relates to a random number expanding device, a random number expanding method and a random number expanding program that expand an M bits random number to an N bits random number, where N is larger than M.

### Background Art

As a basis for information security, cryptography technologies are widely used. In order to use cryptography in safety, information called secret key needs to be kept in secret except for the user. As a measure to store a secret key in safety, a method of using a computer chip is common. The secret key is written in a non-volatile memory in the chip, to which access is restricted from outside the chip. By access restriction, it is possible not to make the secret key read from outside the chip.

There has been considerable researches on attacks to retrieve a key from a computer chip. A fault attack is one of the classifications of attacks. By applying a physical stimulus to a computer, the computer may make a calculation error. There are cases when a secret key can be extracted by inducing a calculation error in a computer chip that processes encryption, and observing how a calculation error occurs in the result. Such an attack is referred to as a fault attack.

One of methods well-known as physical stimulus that provokes calculation errors is laser irradiation onto a computer chip. Non-patent literature 1 describes that by irradiating an appropriate part with a laser, it is possible to set a certain bit in a memory or a resister that stores data inside a computer chip to a logical value 0 or 1. Such an error is referred to as a bit-set/reset fault.

An attacker who can induce a bit-set/reset fault can retrieve secret data by observing if a key is overwritten before and after laser irradiation.

As described in Non-patent literature 2, there are many existing countermeasures against fault attacks. However, many of such countermeasures are ineffective.

One of effective countermeasures against fault attacks is a method to detect that laser irradiation is performed by a sensor, as disclosed in Patent literature 1. However, there are such problems that (1) a local irradiation may be overlooked, (2) the manufacturing cost is increased by using a specific circuit, etc.

Further, another effective countermeasure against fault attacks is a method to use random number masking. Random number masking is a technique as follows. Let an N bits secret key k_{(N)} exists. Here, k_{(N)} = k₁, k₂, ... k_{N}. In random number masking, an N bits random number r_{(N)} is prepared. Here, r_{(N)} = r₁, r₂, ... r_{N}. By taking the exclusive OR of the secret key k_{(N)} and the random number r_{(N)}, masked data is obtained. After that, the random number r_{(N)} and the masked data are stored in a resister. When the secret key k_{(N)} is used, the secret key k_{(N)} can be decrypted by calculating the exclusive OR of the random number r_{(N)} and the masked data. Since the secret key k_{(N)} itself is not stored, the secret key k_{(N)} cannot be retrieved by an attack of laser irradiation. Thus, this can be a countermeasure against the fault attack by laser irradiation.

### Citation List

### Patent Literature

Patent literature 1: JP 2004-206680 A

### Non-Patent Literature

Non-patent literature 1: C. Roscian, A. Sarafianos, J.-M. Dutertre, and A. Tria, "Fault Model Analysis of Laser-Induced Faults in SRAM Memory Cells," Fault Diagnosis and Tolerance in Cryptography (FDTC), 2013 Workshop on, pp. 89-98, Aug. 2013
Non-patent literature 2: M. Joye and M. Tunstall (Eds.), "Fault Analysis in Cryptography," Springer, 2012

### Summary of Invention

### Technical Problem

The random number masking as mentioned above has a problem that the necessary resisters double in number. Thus, the manufacturing cost is increased.

In the random number masking, an easy way to decrease the number of the resisters is a way to use random numbers of only one bit. Let this random number be r. A random number masking that provides random numbers of only one bit will be described. By taking the exclusive OR of each bit of a secret key k_{(N)} and the random number r of one bit, masked data is obtained. The random number r and the masked data are stored in a resister. This method has an advantage that only one bit of a resister is necessary additionally. On the other hand, there is a problem that an attack by laser irradiation to not less than 2 parts at a time may succeed.

The present invention is aimed at providing a device, a method and a program that can reduce the bit numbers of the random numbers to be used, and counter an irradiation attack with multiple laser beams.

### Solution to Problem

There is provided according to one aspect of the present invention, a random number expanding device includes a receiving unit that receives a random number r_{(M)} of M bits, an expanding unit that expands the random number r_{(M)} to a random number s_{(N)} of N bits using a logical operation that is obtained by a multiplication of one matrix of a check matrix with a size of M × N and a generator matrix with a size of M × N which are determined from a linear code for error correction by a vector in a case in which the random number r_{(M)} is the vector having M components, the multiplication being performed through addition based on an exclusive OR, and an outputting unit that outputs a bit value whose number is larger than M bits out of N bits of the random number s_{(N)}, as a random number.

### Advantageous Effects of Invention

Since a random number expanding device of the present invention is provided with an expanding unit, it is possible to reduce the bit numbers of the random numbers to be used, and counter an irradiation attack with multiple laser beams.

### Brief Description of Drawings

Fig. 1 is a diagram of the first embodiment, which is a block diagram of a basic structure of a random number expanding device 100.
Fig. 2 is a diagram of the first embodiment, which is a block diagram in a case wherein the random number expanding device 100 is provided with a masking unit 140 and a storing unit 150.
Fig. 3 is a diagram of the first embodiment, which outlines operations in an expanding unit 120 and the masking unit 140.
Fig. 4 is a diagram of the first embodiment, which is a flowchart of operations in the random number expanding device 100.
Fig. 5 is a diagram of the first embodiment, which is a diagram illustrating operations in the expanding unit 120 that expands a random number by using a linear code.
Fig. 6 is a diagram of the first embodiment, which is a diagram describing that an irradiation attack with a laser succeeds.
Fig. 7 is a diagram of the first embodiment, which is a diagram illustrating an example in which the expanding unit 120 expands a random number r₍₈₎ to a random number s₍₁₅₎ by using a check matrix 1202.
Fig. 8 is a diagram of the first embodiment, which is a diagram illustrating a case in which hardware implements multiplication of the check matrix 1202 in Fig. 7.
Fig. 9 is a diagram of the first embodiment, which is a block diagram in a case wherein the random number expanding device 100 includes a decrypting unit 160.
Fig. 10 is a diagram of the first embodiment, which is a diagram illustrating a circuit structure of Fig. 9.
Fig. 11 is a diagram of the first embodiment, which is a diagram illustrating operations in the expanding unit 120 and the masking unit 140 at the time of re-masking.
Fig. 12 is a diagram of the first embodiment, which is a diagram illustrating a circuit structure in a case of performing re-masking.
Fig. 13 is a diagram of the first embodiment, which is a flowchart of re-masking.
Fig. 14 is a diagram of the first embodiment, which is a diagram describing a truncating process performed by the expanding unit 120.
Fig. 15 is a diagram of the first embodiment, which is a block diagram in a case wherein the random number expanding device 100 is provided with an error detecting unit 170 that detects an error included in a bit sequence.
Fig. 16 is a diagram of the second embodiment, which is a diagram illustrating an example of a hardware structure in a case of realizing the random number expanding device 100 by a computer.
Fig. 17 is a diagram of the second embodiment, which is a diagram in which the random number expanding device 100 is mounted on a semiconductor device.

### Description of Embodiments

### First Embodiment

The following embodiment is based on the premise of (1) through (4) below.
(1) Random numbers appear in the following description. Let the random numbers be r and s.
   The random number r is a random number before expansion, and the random number s is a random number after expansion.
(2) In the following description, integer numbers N, M and V representing bit numbers appear, where N > V > M.
(3) r_{(M)} represents an M bits random number. r_{M} represents the M-th bit of r_{(M)}. Random numbers are distinguished by <1> and <2> as with r_{<1>, (M)} and r_{<2>, (M)}. In r_{<1>, (M)} and r_{<2>, (M)}, etc., (M) may be abbreviated as with r_{<1>} and r_{<2>}. The same things apply to the random number s.
(4) An exclusive OR operation is described as < +> for descriptive purposes. r_{<1>, (M)} < + > r_{<2>, (M)} represents an exclusive OR between the bits of r_{<1>}, _{(M)} and r_{<2>, (M)}.

### *** Description of the stricture ***

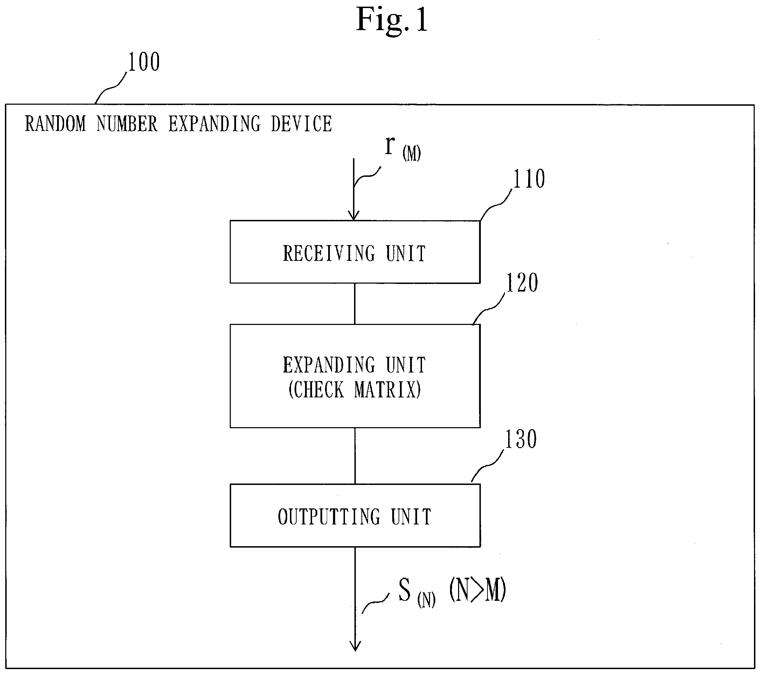

With reference to Fig. 1 through Fig. 16, the first embodiment will be described.

Fig. 1 is a block diagram of a basic structure of the random number expanding device 100.

The random number expanding device 100 is provided with a receiving unit 110, an expanding unit 120 and an outputting unit 130.

The receiving unit 110 receives the M bits random number r_{(M)}.

The expanding unit 120 expands the random number r₍ₘ₎ to an N bits random number S_{(N)} by using a logical operation obtained by multiplication of one matrix of a check matrix with a size of M × N and a generator matrix with a size of M × N, which are determined from a linear code for error correction, by a vector in a case wherein the random number r_{(M)} is the vector with M components, in which multiplication addition is made into an exclusive OR.

That is, the expanding unit 120 expands the random number r_{(M)} to the N bits random number S_{(N)} using the logical operation obtained by multiplication of one matrix of the check matrix with the size of M × N and the generator matrix with the size of M × N, which are determined from an (N, N-M, D) linear code for error correction, by the vector in the case wherein the random number r_{(M)} is the vector with M components. In other words, the expanding unit 120 expands a random number using the logical operation obtained by multiplication of one matrix by the vector with M components.

The (N, N-M, D) linear code for error correction is represented by a code length N, an information bit length N-M and a minimum distance D representing a minimum value of a hamming distance between different code words, using an integer number M expressing M bits, N being an integer number larger than M, and an integer number D. The (N, N-M, D) linear code will be discussed below.

The multiplication of one matrix of the check matrix with the size of M × N and the generator matrix with the size of M × N by the vector in the case wherein the random number r_{(M)} is the vector with M components is the multiplication wherein addition is made into an exclusive OR. This multiplication is hereinafter referred to as an XOR multiplication, or may be simply referred to as a multiplication. Further, the check matrix and the generator matrix will be discussed below. The expanding unit 120 generates N components obtained by the XOR multiplication of one matrix of the check matrix and the generator matrix by the random number r_{(M)} as a random number s_{(N)}.

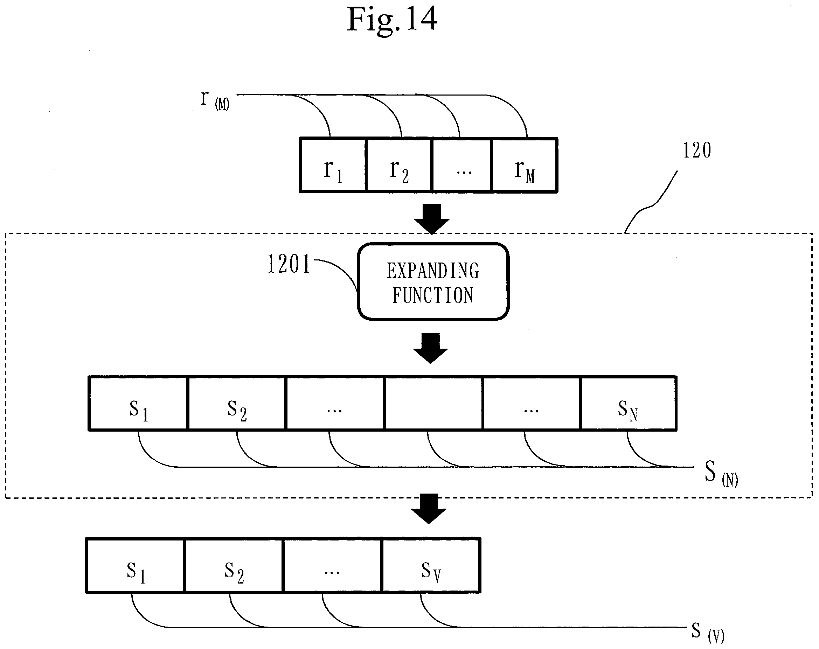

The outputting unit 130 outputs bit values whose number is larger than M bits out of N bits of the random number s_{(N)} as a random number. The outputting unit 130 outputs s_{(N)} when r_{(M)} is expanded to s_{(N)} by the expanding unit 120. Otherwise, in a case of a truncating process as described below, the outputting unit 130 outputs a V bit random number s_{(V)} in which at least 1 bit is removed from s_{(N)}. Here, the magnitude of each integer number is N > V > M. As will be discussed for Fig. 14, the expanding unit 120 generates the V bits random number s_{(V)} represented by the integer number V smaller than the integer number N and larger than the integer number M, by removing at least 1 bit from the expanded random number s_{(N)}. The outputting unit 130 outputs the random number s_{(V)}.

Additionally, as will be discussed for re-masking below, the receiving unit 110 receives the third random number r_{<3>, (M)} as the random number r_{(M)}, which is obtained by taking the exclusive OR of the first M bits random number r_{<1>, (M)} and the second M bits random number r_{<2>, (M)}. The expanding unit 120 expands the third random number r_{<3>, (M)} to an XOR random number obtained by exclusive-ORing an N bits random number s_{<1>, (N)} corresponding to a random number whereto the first random number r_{<1>}, _{(M)} is expanded, and an N bits random number s_{<2>, (N)} corresponding to a random number whereto the second random number r_{<2>, (M)} is expanded. A storing unit 150 stores data masked with the random number s_{<1>, (N)}. A masking unit 140 below performs an operation of X <+> s_{<1>, (N)} as the data masked with the random number s_{<1>, (N)}, and s_{<1>, (N)} <+> s_{<2>, (N)} as the XOR random number expanded by the expanding unit 120. By this operation, the masking unit 140 performs re-masking to convert the data masked with the random number s_{<1>, (N)} to data masked with the random number s_{<2>, (N)}.

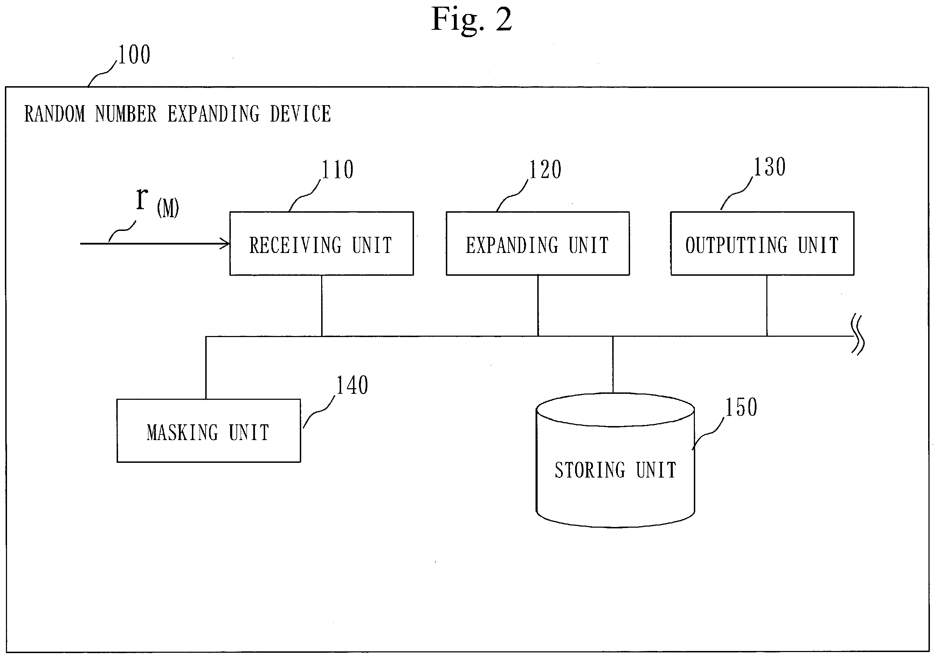

Fig. 2 is a block diagram in a case wherein the random number expanding device 100 is further provided with the masking unit 140 and the storing unit 150.

The masking unit 140 masks data with a random number output by the outputting unit 130. The storing unit 150 stores the data masked by the masking unit 140.

### *** Explanation of operations ***

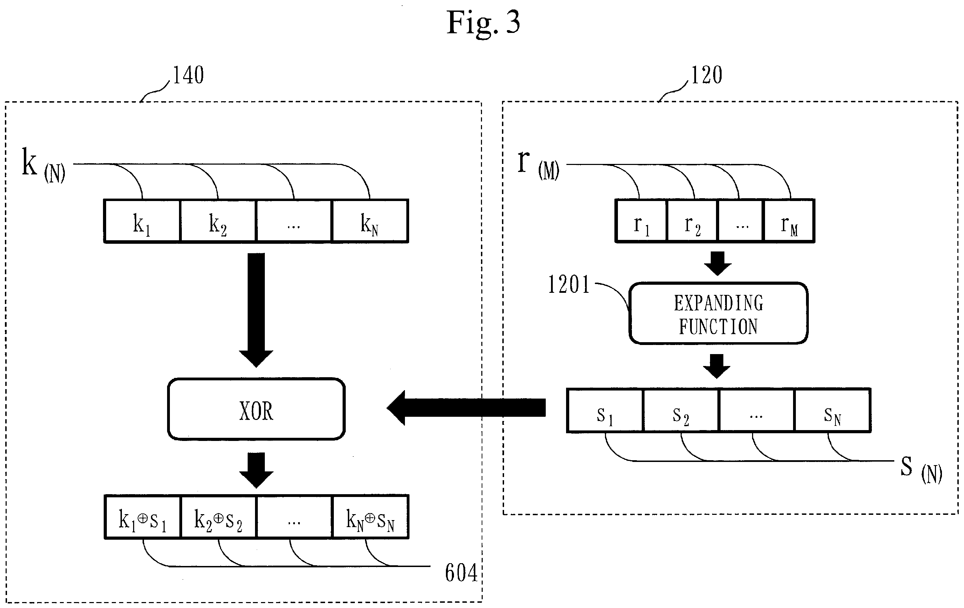

Fig. 3 outlines operations in the expanding unit 120 and the masking unit 140.

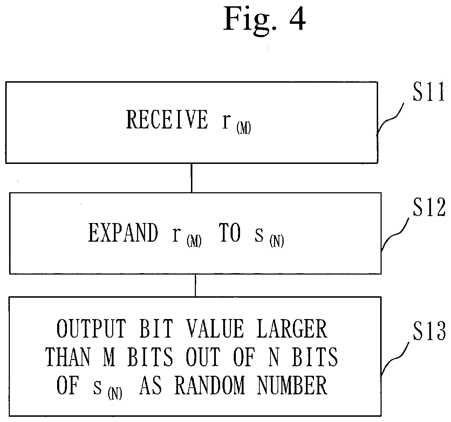

Fig. 4 is a flowchart of operations in the random number expanding device 100.

The operations in the random number expanding device 100 are described with reference to Fig. 2 through Fig. 4. Let the secret key k_{(N)} be N bits, from k₁ to k_{N}.
(1) The receiving unit 110 executes a step S11. In the step S11, the receiving unit 110 receives the M bits random number r_{(M)}.
(2) The expanding unit 120 executes a step S12. In the step S12, the expanding unit 120 expands the random number r_{(M)} to the N bits random number s_{(N)} using the logical operation obtained by multiplication of one matrix of the check matrix with the size of M × N and the generator matrix with the size of M × N, which are determined from the (N, N-M, D) linear code for error correction, by the vector in the case wherein the random number r_{(M)} is the vector with M components. In this way, the expanding unit 120 converts the random number r_{(M)} to the random number S_{(N)} using an expanding function 1201. The expanding function 1201 will be discussed below.
(3) The outputting unit 130 executes a step S13. In the step S13, the outputting unit 130 outputs bit values, the number of which is not smaller than M + 1, which is larger than M bits, out of N bits of the random number s_{(N)}, as a random number.
(4) When the outputting unit 130 outputs the random number S_{(N)} as a random number, the masking unit 140 generates data 604 as masked secret key k_{(N)} by taking the exclusive OR of the secret key k_{(N)} and the random number s_{(N)}. The random number r_{(M)} and the data 604 are stored in a memory or a resister as the storing unit 150. According to the above operations, data masking can be performed by using a random number of a desired bit number.

One of the characteristics of the random number expanding device 100 is to use a linear code technique for expanding random numbers.

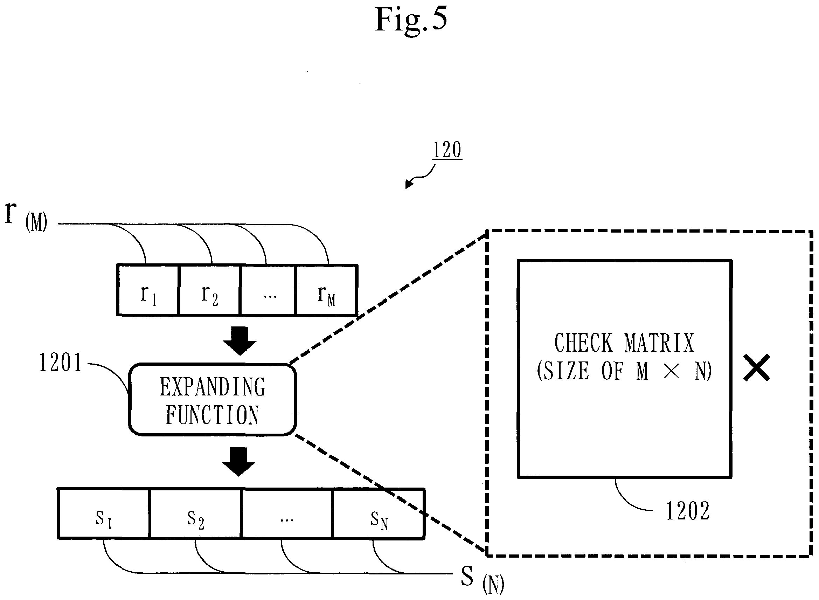

Fig. 5 is a diagram illustrating operations in the expanding unit 120 that expands a random number by using the linear code technique.

The expanding unit 120 expands the random number r_{(M)} to the random number s_{(N)} using the expanding function 1201. The expanding unit 120 uses the (N, N-M, D) linear code for expanding random numbers. N is a code length, N-M is an information bit length, and D is a minimum distance representing a minimum value of a hamming distance between different code words. The expanding function 1201 is defined by multiplication by the check matrix 1202. The check matrix 1202 is a matrix with a size of M × N determined from the (N, N-M, D) linear code. Since the check matrix 1202 is also a generator matrix, the check matrix 1202 can be also read as the generator matrix. The check matrix 1202, or the generator matrix, has dimensions of M × N. Having the dimensions of M × N means having M rows and N columns, or may having N rows and M columns. Since the check matrix 1202 is also the generator matrix, let a matrix to be used for defining the expanding function 1201 be the check matrix 1202 below. Since the check matrix 1202 has the dimensions of M × N, r_{(M)} as input data of M bits can be output as output data s_{(N)} of N bits. One of the characteristics of the expanding unit 120 is to use an error correction code not for detecting a bit error, but for expanding the random number r_{(M)} as input data to the random number s_{(N)}.

As an effect of expanding a random number using the check matrix 1202 of the (N, N-M, D) linear code, it is possible to improve the security against laser irradiation up to (D-1) beams. This is due to the next reason. The check matrix 1202 has N columns. When the check matrix 1202 has N rows and M columns, it suffices to transpose the check matrix 1202. By the property of the (N, N-M, D) linear code, any column of (D-1) number in the check matrix 1202 is linearly independent. Corresponding to the linear independence, any (D-1) bits, being extracted out of the random number s_{(N)} as N bits data that has been expanded by the check matrix 1202, are linearly independent. If linearly dependent A of columns exist, this means lack of random numbers. Thus, an attack is made possible by performing irradiation with A of laser beams. When the (N, N-M, D) linear code is used, since any (D-1) is linearly independent, the mentioned attack can be prevented against laser irradiation up to (D-1) beams.

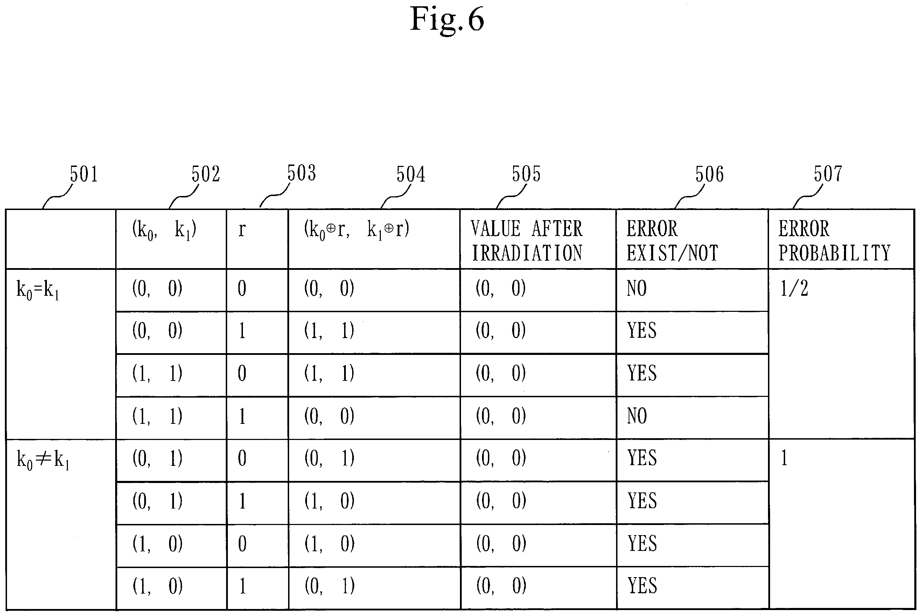

Fig. 6 is a table illustrating an example that an irradiation attack with a laser toward two and more parts at the same time succeeds. By use of Fig. 6, an example will be discussed wherein an irradiation attack with a laser toward two and more parts at the same time succeeds in a case not according to the present embodiment.

Let a 2 bits secret key desired to be protected be k₍₂₎. Let each bit of the secret key k₍₂₎ be k₀ and k₁. Let a 1 bit random number be r. An attacker knows that bits of the secret key k₍₂₎ after laser irradiation become (0, 0). A column 501 is for cases when the secret key k₍₂₎ is k₀ = k₁, and when k₀ ≠ k₁. A column 502 is for specific bits in the cases when k₀ = k₁, and when k₀ ≠ k₁. A column 503 indicates values of the random numbers r. A column 504 indicates masked secret keys k₍₂₎. A column 505 indicates values after laser irradiation. A column 506 indicates whether an error exists or not. A column 507 indicates error probabilities. The aim of the attacker is to judge whether k₀ = k₁ or not. Judging whether k₀ - k₁ or not has the same effect as obtaining one bit of a key. The secret key k₍₂₎ is masked using 1 bit random numbers r. The masked values are in the column 504. The attacker irradiates two parts of a resister that keeps the masked values with a laser. As indicated in the column 506, when k₀ = k₁, an error may not occur. Meanwhile, when k₀ ≠ k₁, an error inevitably occurs. Therefore, by testing if an error may occur or not, the attacker can judge whether k₀ = k₁ or not. That means success in attack. By applying the method of the present embodiment to the attack as illustrated in Fig. 6, it is possible to counter laser irradiation up to (D-1) beams.

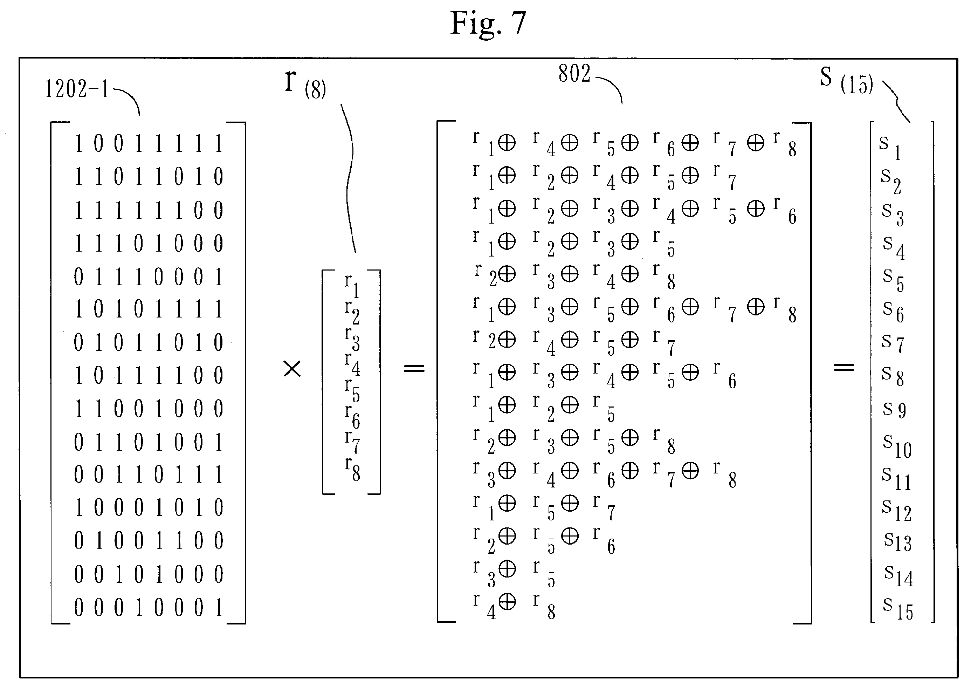

Fig. 7 illustrates an example in which the expanding unit 120 expands a random number r₍₈₎ to a random number s₍₁₅₎ using the check matrix 1202.

Fig. 7 is an example when the (15, 7, 5) linear code disclosed in "Hideki Imai, 'Coding Theory,' IEICE, 1990." is used, wherein N = 15 and M = 8. Therefore, the size of the check matrix 1202 is 8 × 15. A matrix 1202-1 is a transposed matrix of the check matrix 1202. A matrix 1202-1 is a size of 15 rows and 8 columns. By multiplying the matrix 1202-1 by the random number r₍₈₎, the random number r₍₈₎ can be expanded to the 15 bits random number s₍₁₅₎. The multiplication of the check matrix 1202 by a vector in a case when the random number r₍₈₎ is the vector with eight components is exclusive-OR multiplication. By masking the secret key k₍₁₅₎ in a resister with the random number s₍₁₅₎ generated by using the matrix 1202-1, it is possible to maintain the security against laser irradiation up to four beams at a time. Each component as each bit of a value 802 being a result of the exclusive-OR multiplication is exclusive OR of each bit (r₁, ..., r₈) of the original random number r₍₈₎. That is, each bit of the random number s₍₁₅₎, such as s₁ and so on is exclusive OR of r₁ and so on. As illustrated in Fig. 7, the expanding unit 120 generates N components obtained by the exclusive-OR multiplication of the matrix 1202-1 with the size of M × N, by the random number r_{(M)}, as the random number s_{(N)}.

Here, the transposed matrix 1202-1 is used in Fig. 7; however, it is only for convenience. It suffices to perform a calculation so as to obtain the random number s₍₁₅₎ by the exclusive-OR multiplication of the check matrix 1202 with the size of 15 × 8 determined from the (15, 7, 5) linear code, by the random number r₍₈₎. That is, it suffices to obtain the random number s_{(N)} by multiplying the check matrix 1202 with the size of M × N determined from the (N, N-M, D) linear code, by the random number r_{(M)}. Specifically, when the check matrix 1202 is H and a transposed matrix of the matrix H is H^{t},
(1) when H has N rows and M columns, it suffices to calculate H × r_{(M)} by letting the random number r_{(M)} have M rows and 1 column; otherwise, it suffices to calculate r_{(M)} × H^{t} by letting the random number r_{(M)} have 1 row and M columns.
(2) when H has M rows and N columns, it suffices to calculate r_{(M)} × H by letting the random number r_{(M)} have 1 row and M columns; otherwise, it suffices to calculate H^{t} × r_{(M)} by letting the random number r_{(M)} have M rows and 1 column.

The structures illustrated in Fig. 1 and Fig. 2, etc. may be composed of hardware, software, or may be composed of a combination of hardware and software.

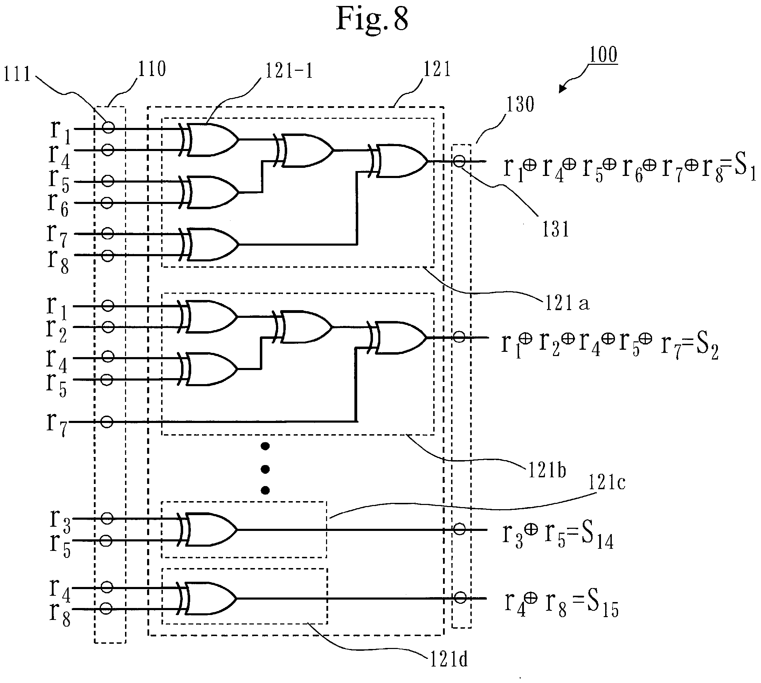

Fig. 8 illustrates a case in which hardware implements the multiplication of the check matrix 1202 illustrated in Fig. 7. The expanding unit 120 is equipped with a logical operation circuit 121 that executes logical operations.

In Fig. 8, the receiving unit 110 is input terminals 111 of each XOR logical gate in an input stage, and the outputting unit 130 is output terminals 131 of each XOR logical gate in an output stage. The logical operation circuit 121 is equipped with a plurality of XOR circuits 121-1. The uppermost circuit 121a in Fig. 8 is a circuit that calculates s₁ bit of the random number s₍₁₅₎. The second circuit 121b from above is a circuit that calculates s₂ bit of the random number s₍₁₅₎. The undermost circuit 121d in Fig. 8 is a circuit that calculates s₁₅ bit of the random number s₍₁₅₎. The second circuit 121c from the bottom is a circuit that calculates s₁₄ bit of the random number s₍₁₅₎. Circuits that calculate s₃ through s₁₃ bits are omitted. Exclusive OR can be realized directly by XOR logical gates. Thus, by using an XOR network, small and high-speed circuits can be implemented.

The random number expanding device 100 may be equipped with a decrypting unit that decrypts masked data.

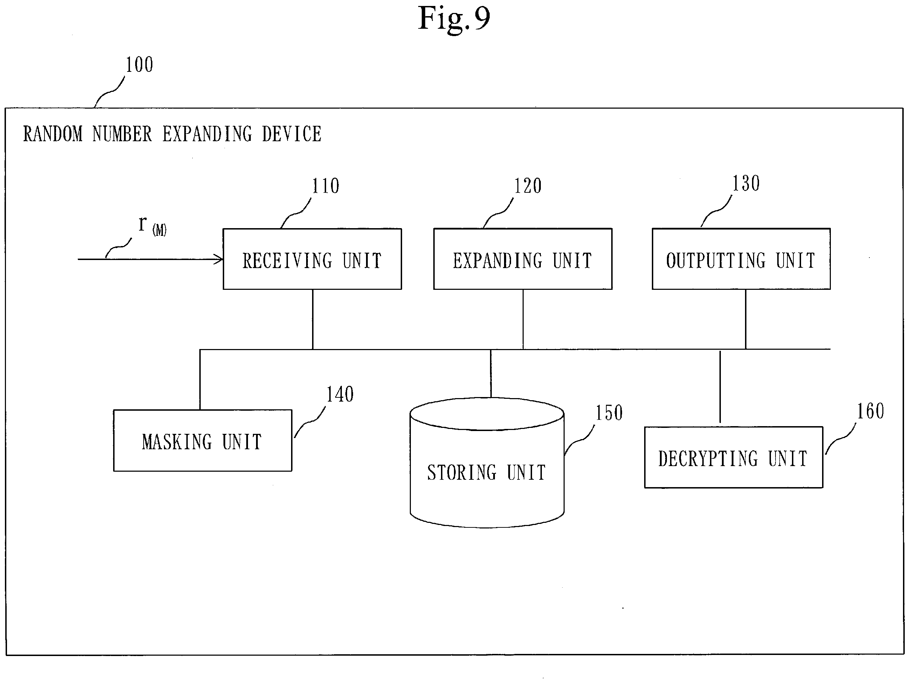

Fig. 9 is a block diagram in a case wherein the random number expanding device 100 includes a decrypting unit 160.

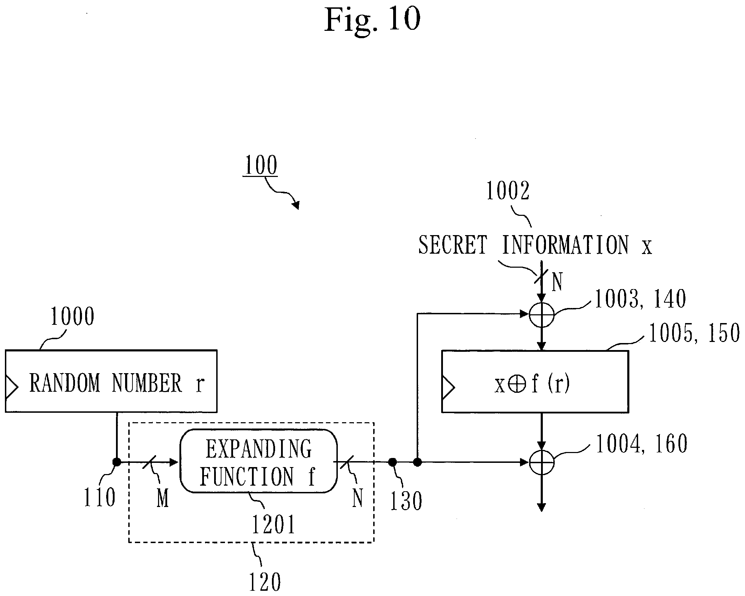

Fig. 10 describes a circuit structure of Fig. 9, wherein the random number r_{(M)} is indicated as r.

The random number expanding device 100 in Fig. 10 is equipped with a resister 1000 that stores the random number r_{(M)}, the expanding unit 120 as a circuit to expand the random number r_{(M)}, an XOR logical gate 1003 as the masking unit 140, an XOR logical gate 1004 as the decrypting unit 160 to unmask and a resister 1005 as the storing unit 150 to store masked data. The check matrix 1202 is used for the expanding function 1201. The specific structure of the expanding unit 120 in Fig. 10 is a network of XOR logical gates as illustrated in Fig. 8 in the present embodiment; however, it may be composed of a program as discussed above. Masking of N bits secret information x is performed as follows. f indicates the expanding function 1201. First, the random number r_{(M)} stored in the resister 1000 is converted to an N bits random number f₍ᵣ₎ by the expanding unit 120. Here, f₍ᵣ₎ = s_{(N)}. By taking exclusive OR of f₍ᵣ₎ = s_{(N)} and the N bits secret information x, a masked value x <+> f₍ᵣ₎ is obtained. The masked value x <+> f₍ᵣ₎ is stored in the resister 1005. The output of the resister 1005 is connected to the XOR logical gate 1004. By the XOR logical gate 1004, x <+> f₍ᵣ₎ <+> f₍ᵣ₎ = x is established, and the secret information X before masking is decrypted.

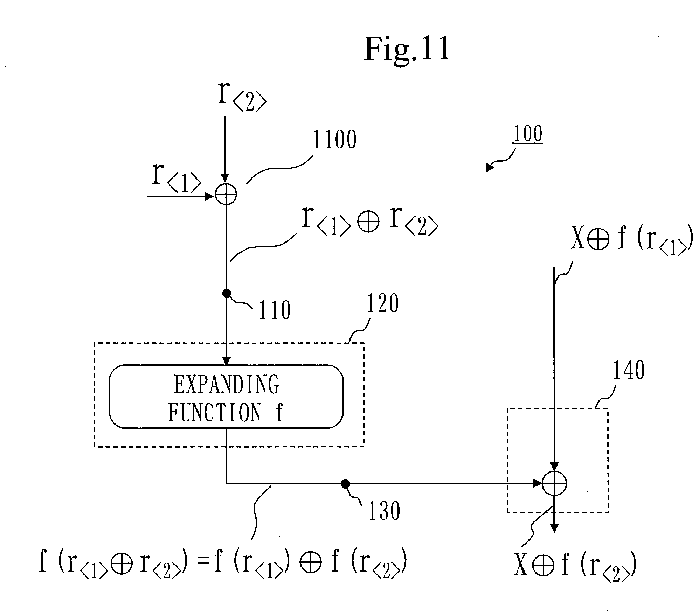

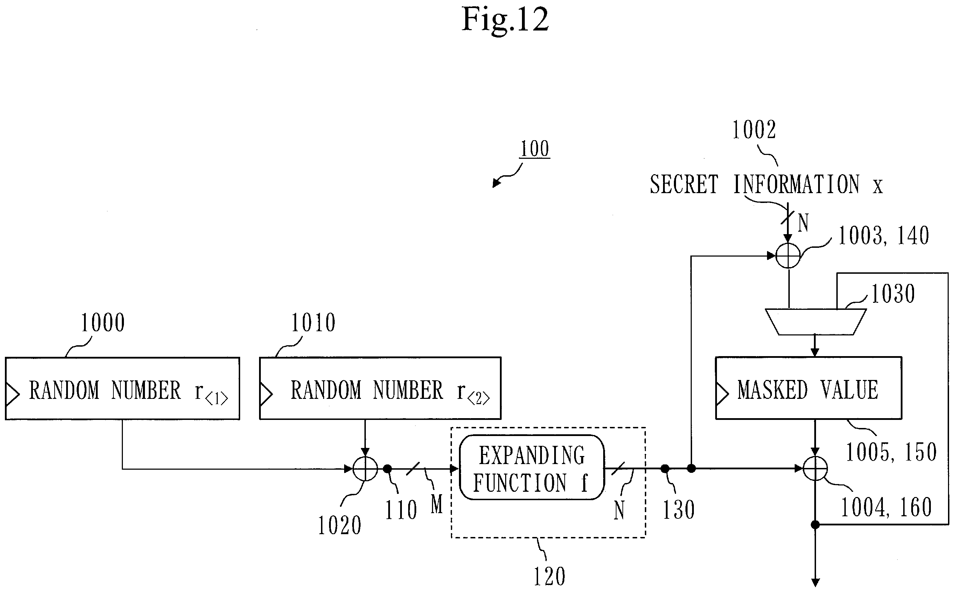

With reference to Fig. 11 and Fig. 12, re-masking will be discussed.

In a random number masking, there is a case in which change of a masking value is desired. By changing the masking value, the security may be improved. Changing of the masking value is called re-masking. By the random number expanding device 100, re-masking can be performed effectively.

Fig. 11 illustrates operations in the expanding unit 120 and the masking unit 140 at the time of re-masking. Re-masking will be explained by the use of Fig. 11.

Let M bits random numbers be the first random number r_{<1>} and the second random number r_{<2>}. Let the N bits random numbers which are expanded from r_{<1>} and r_{<2>} be s_{<1>} and s_{<2>}. Now, it is desired to re-mask the value x <+> f(r_{<1>}) that has been masked with f(r_{<1>}) to another masked value x <+> f(r_{<2>}). The random number s_{<1>} = f(r_{<1>}) and the random number s_{<2>} = f(r_{<2>}). Further, x is secret information, r_{<1>} is a random number for old masking, and r_{<2>} is a random number for new masking. First, the XOR logical gate 1100 generates r_{<1>} <+> r_{<2>}.

Next, the receiving unit 110 receives r_{<1>} <+> r_{<2>} as the third random number r_{<3>, (M)}. The expanding unit 120 expands r_{<1>} <+> r_{<2>} to a random number f(r_{<1>} <+> r_{<2>}). The outputting unit 130 outputs the random number f(r_{<1>} <+> r_{<2>}). Since the expanding function f defined by multiplication with the check matrix 1202 is linear, f(r_{<1>} <+> r_{<2>}) = f(r_{<1>}) <+> f(r_{<2>}) = s_{<1>} <+> s_{<2>} is established. The masking unit 140 takes the exclusive OR of the masked value x <+> f(r_{<1>}) and the expanded random number f(r_{<1>}) <+> f(r_{<2>}). In this way, the masking unit 140 obtains x <+> f(r_{<1>}) <+> f(r_{<1>}) <+> f(r_{<2>}) = x <+> f(r_{<2>}). Thus, the new value x <+> f(r_{<2>}) is a result of re-masking.

The re-masking method using the expanding function f as above has two important advantages. First, only one expanding function f is necessary to be prepared. Secondly, re-masking is executed without returning to the original value x not being masked, which may improve the security.

Fig. 12 illustrates a circuit structure of the random number expanding device 100 in a case of performing re-masking, which corresponds to the block diagram of Fig. 9. Fig. 12 extends the circuit structure illustrated in Fig. 9, to which a re-masking function is added.

In Fig. 12, a resister 1010 for a new random number r_{<2>,} an XOR logical gate 1020 that adds the random numbers r_{<1>} and r_{<2>} and a selector 1030 are added, which are new relative to Fig. 9. The XOR logical gate 1004 includes the function of the masking unit 140 as well in addition to the function of the decrypting unit 160 in Fig. 10. By using the circuit of Fig. 10, re-masking can be realized.

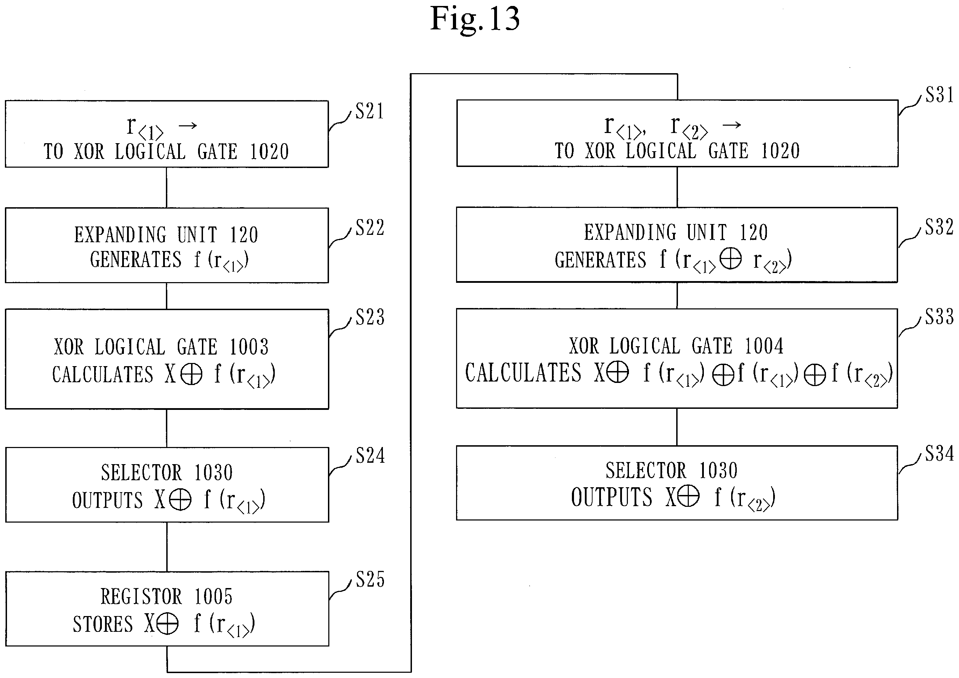

Fig. 13 is a flowchart illustrating operations in the random number expanding device 100 in Fig. 12.

With reference to Fig. 13, the operations will be discussed.

In S21, only the random number r_{<1>} is sent to the XOR logical gate 1020. The output of the XOR logical gate 1020 is the random number r_{<1>}.

In S22, the expanding unit 120 generates s_{<1>} = f(r_{<1>}), and f(r_{<1>}) is output from the outputting unit 130.

In S23, the XOR logical gate 1003 takes the exclusive OR of the secret information x and the f(r_{<1>}).

In S24, x <+> f(r_{<1>}) is output from the selector 1030.

In S25, x <+> f(r_{<1>}) is stored in the resister 1005.

Next, in S31, the random number r_{<1>} and the random number r_{<2>} are sent to the XOR logical gate 1020. The output of the XOR logical gate 1020 is r_{<1>} <+> r_{<2>}.

In S32, the expanding unit 120 expands r_{<1>} <+> r_{<2>} to f(r_{<1>} <+> r_{<2>}) = f(r_{<1>}) <+> f(r_{<2>}) by the expanding function f, and the outputting unit 130 outputs f(r_{<1>}) <+> f(r_{<2>}).

In S33, by the XOR logical gate 1004, f(r_{<1>}) <+> f(r_{<2>}) output from the outputting unit 130 is exclusive-ORed with x <+> f(r_{<1>}) output from the resister 1005. Thus, from the XOR logical gate 1004, x <+> f(r_{<1>}) <+> f(r_{<1>}) <+> f(r_{<2>}) = x <+> f(r_{<2>}) is output.

In S34, x <+> f(r_{<2>}) is output from the selector 1030, and x <+> f(r_{<2>}) is stored in the resister 1005. In this way, re-masking is completed. In order to decrypt re-masked x <+> f(r_{<2>}), it suffices to send only the random number r_{<2>} to the XOR logical gate 1020, expand the random number r_{<2>} to f(r_{<2>}) by the expanding unit 120, and XOR f(r_{<2>}) and x <+> f(r_{<2>}) stored in the resister 1005 by the XOR logical gate 1004.

Fig. 14 is a diagram that describes a truncating process performed by the expanding unit 120.

With reference to Fig. 14, the truncating process will be discussed.

In what follows, N, V and M are positive integer numbers, where N > V > M. It is not always true that a (V, V-M, D) linear code exists when expansion of the random number r_{(M)} to the random number s_{(V)} is desired. In such a case, truncation can be performed. The truncating process will be discussed with the use of Fig. 14. It is assumed that a convenient (V, V-M, D) linear code cannot be made when expansion of the M bits random number r_{(M)} to the V bits random number s_{(V)} is desired. However, it is assumed that N can be selected, where N > V, and the (N, N-M, D) linear code can be made. In this case, the check matrix 1202 of the (N, N-M, D) linear code can be used for the expanding function 1201. The output of the expanding function 1201 is N bits. That is, after expanding the random number r_{(M)} to the random number s_{(N)}, the expanding unit 120 generates a V bits random number S_{(V)} by discarding some bits from the random number s_{(N)}. The random number s_{(V)} as an output made in this manner can be used as a masking random number.

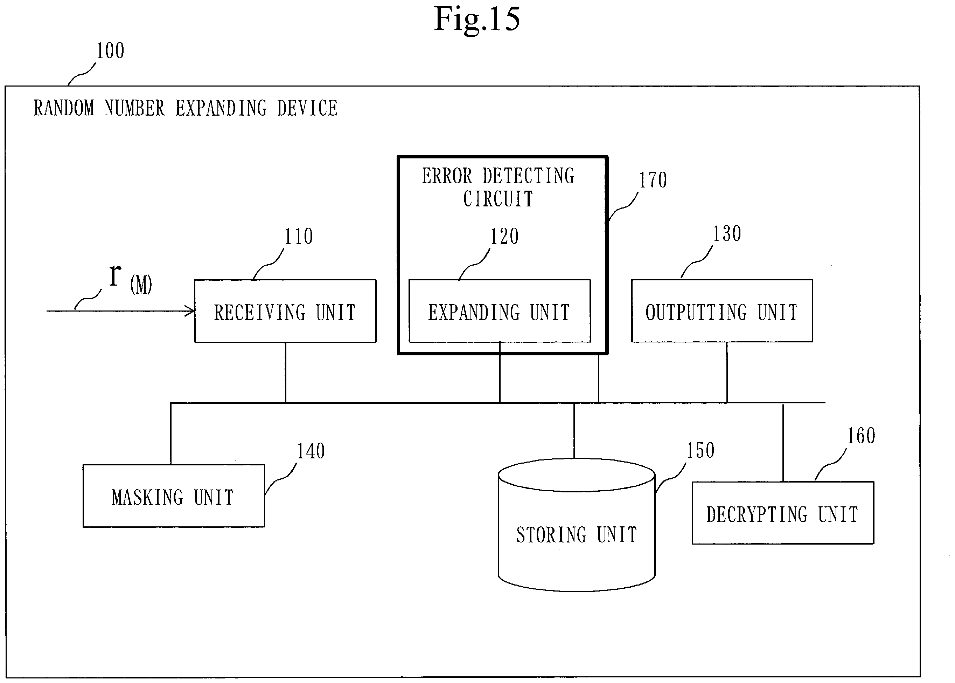

Fig. 15 is a block diagram wherein the random number expanding device 100 is provided with an error detecting unit 170 that detects an error included in a bit sequence.

The expanding unit 120 uses at least a part of the error detecting unit 170 at the time of expanding the random number r_{(M)} to the random number s_{(N)}. The error detecting unit may be a circuit as hardware for error correcting codes, or may be a program for error correcting codes. By using at least a part of the error detecting unit 170, it is possible to reduce the circuit scale and the size of the program.

### *** Explanation of the effect ***

By bundling the resisters to store data masked with the expanded random numbers according to the present embodiment, it is possible to make a resister file having resistance properties against laser irradiation.

Further, by storing the data masked with the expanded random numbers according to the present embodiment in a volatile memory, it is possible to realize the volatile memory with resistance properties against laser irradiation.

### Second Embodiment.

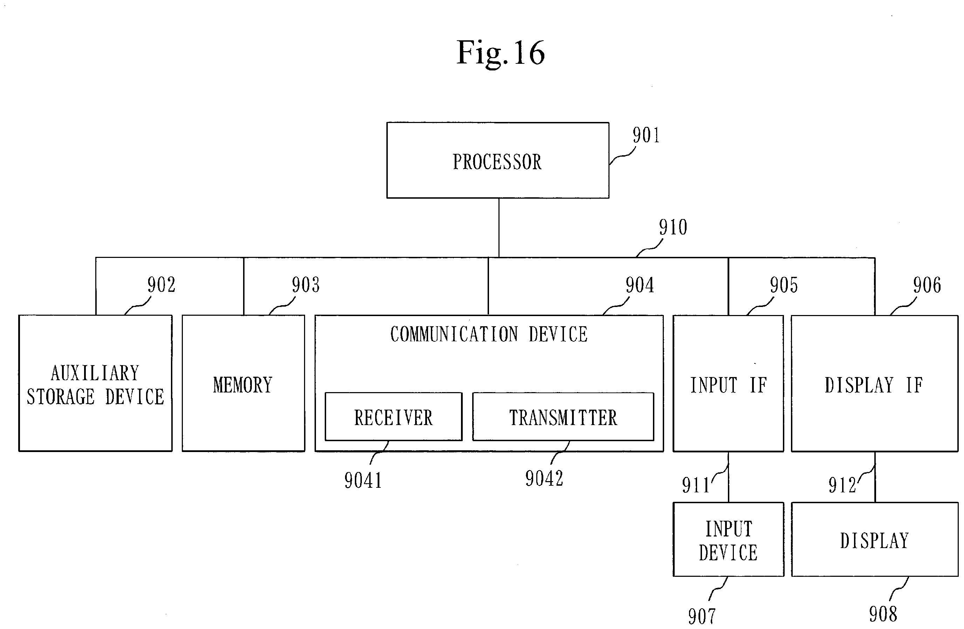

Fig. 16 is an example of a hardware structure in a case of realizing the random number expanding device 100 by a computer. The explanation will be provided with reference to Fig. 16.

The random number expanding device 100 as the computer is equipped with hardware devices such as a processor 901, an auxiliary storage device 902, a memory 903, a communication device 904, an input interface 905 and a display interface 906. The processor 901 is connected to the other hardware devices via a signal line 910 to control these other hardware devices. The input interface 905 is connected to the input device 907. The display interface 906 is connected to a display 908.

The processor 901 is an IC (Integrated Circuit) that performs processing. The processor 901 is, for example, a CPU (Central Processing Unit), a DSP (Digital Signal Processor), or a GPU (Graphics Processing Unit). The auxiliary storage device 902 is, for example, a ROM (Read Only Memory), a flash memory, or an HDD (Hard Disk Drive). The memory 903 is, for example, a RAM (Random Access Memory). The communication device 904 includes a receiver 9041 that receives data and a transmitter 9042 that transmits data. The communication device 904 is, for example, a communication chip and a NIC (Network Interface Card). The input interface 905 is a port to which a cable 911 of the input device 907 is connected. The input interface 905 is, for example, a USB (Universal Serial Bus) terminal. The display interface 906 is a port to which a cable 912 of the display 908 is connected. The display interface 906 is, for example, a USB terminal, or an HDMI (registered trademark) (High Defmition Multimedia Interface) terminal. The input device 907 is, for example, a mouse, a keyboard, or a touch panel. The display 908 is, for example, an LCD (Liquid Crystal Display).

In the auxiliary storage device 902, a program that realizes the functions of the receiving unit 110, the expanding unit 120, the outputting unit 130, the masking unit 140, the storing unit 150 and the decrypting unit 160 illustrated in Fig. 9 (the receiving unit 110 through the decrypting unit 160 are as a whole indicated as "units" below) is stored. This program is loaded into the memory 903, read by the processor 901, and executed by the processor 901. Further, in the auxiliary storage device 902, an OS (Operating System) is also stored. Then, at least a part of the OS is loaded into the memory 903, and the processor 901 executes the program that realizes the functions of the "units" while executing the OS.

Although one processor 901 is illustrated in Fig. 16, the random number expanding device 100 may be equipped with a plurality of processors 901. Then, the plurality of processors 901 may work together to execute the program that realizes the functions of the "units." Further, information, data, signal values and variable values indicating results of the processing by the "units" are stored in the memory 903, the auxiliary storage device 902, and a resister or a cache memory in the processor 901.

The "units" may be provided by "circuitry." Further, the "units" may be read as "circuits," "processes," "steps," or "processing." The "circuits" and the "circuitry" are concepts including not only the processor 901 but also other types of processing circuits such as a logic IC, a GA (Gate Array), an ASIC (Application Specific Integrated Circuit) and an FPGA (Field-Programmable Gate Array), etc.

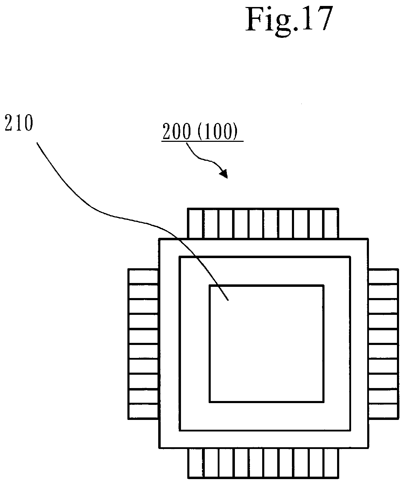

Fig. 17 is a diagram in which the random number expanding device 100 explained in the first embodiment is realized by a semiconductor device 200.

The semiconductor device 200 is equipped with a plurality of circuits as the random number expanding device 100. In a resister 210 of the semiconductor device 200, the masked secret key and the random numbers r_{(M)} before expansion are stored.

### Reference Signs List

100: random number expanding device; 110: receiving unit; 120: expanding unit; 121: logical operation circuit; 121-1: XOR circuit; 130: outputting unit; 140: masking unit; 150: storing unit; 160: decrypting unit; 170: error detecting unit.

## Claims

1. A random number expanding device comprising:
a receiving unit that receives a random number r_{(M)} of M bits;
an expanding unit that expands the random number r_{(M)} to a random number s_{(N)} of N bits using a logical operation that is obtained by a multiplication of one matrix of a check matrix with a size of M × N and a generator matrix with a size of M × N which are determined from a linear code for error correction by a vector in a case in which the random number r_{(M)} is the vector having M components, the multiplication being performed through addition based on an exclusive OR; and
an outputting unit that outputs a bit value whose number is larger than M bits out of N bits of the random number s_{(N)}, as a random number.

2. The random number expanding device as defined in claim 1, wherein the expanding unit generates N number of components that are obtained by the multiplication of the one matrix by the random number r_{(M)}, as the random number s_{(N)}.

3. The random number expanding device as defined in claim 1 or claim 2, wherein the expanding unit generates a random number s_{(V)} of V bits indicated by an integer number V, which is smaller than an integer number N and larger than an integer number M, by removing at least one bit from the random number s_{(N)}, and wherein the outputting unit outputs the random number s_{(V)}.

4. The random number expanding device as defined in any one of claim 1 through claim 3, wherein the expanding unit includes a logical operation circuit that executes the logical operation.

5. The random number expanding device as defined in claim 4, wherein the logical operation circuit includes a plurality of exclusive or circuits.

6. The random number expanding device as defined in any one of claim 1 through claim 5, the random number expanding device further comprising:
a masking unit that masks data with a random number that is output by the outputting unit; and
a storing unit that stores the data masked by the masking unit.

7. The random number expanding device as defined in claim 6,
wherein the receiving unit receives as the random number r_{(M)} a third random number r_{<3>, (M)}, which is obtained by calculating an exclusive or of a first random number r_{<1>}, _{(M)} of M bits and a second random number r_{<2>, (M)} of M bits,
wherein the expanding unit expands the third random number r_{<3>, (M)} to an XOR random number that is obtained as an exclusive or of a random number s_{<1>, (N)} of N bits corresponding to a random number whereto the first random number r_{<1>}, _{(M)} is expanded, and a random number s_{<2>, (N)} of N bits corresponding to a random number whereto the second random number r_{<2>, (M)} is expanded,
wherein the storing unit stores data that is masked with the random number s_{<1>, (N)}, and
wherein the masking unit performs re-masking that converts the data masked with the random number s_{<1>}, _{(N)} into data masked with the random number s_{<2>}, _{(N)}, by an operation between the data masked with the random number s_{<1>}, _{(N)} and the XOR random number expanded by the expanding unit.

8. The random number expanding device as defined in any one of claim 1 through claim 7, the random number expanding device further comprising an error detecting unit that detects an error included in a bit sequence, wherein the expanding unit uses at least a part of the error detecting unit when the random number r_{(M)} is expanded to the random number s_{(N)}.

9. A random number expanding method comprising:
receiving a random number r_{(M)} of M bits;
expanding the random number r_{(M)} to a random number s_{(N)} of N bits by a logical operation circuit using a logical operation that is obtained by a multiplication of one matrix of a check matrix with a size of M × N and a generator matrix with a size of M × N which are determined from a linear code for error correction by a vector in a case in which the random number r_{(M)} is the vector having M components, the multiplication being performed through addition based on an exclusive OR; and
outputting a bit value whose number is larger than M bits out of N bits of the random number s_{(N)}.

10. A random number expanding program that makes a computer to execute:
a receiving process of a random number r_{(M)} of M bits;
an expanding process of the random number r_{(M)} to a random number s_{(N)} of N bits using a logical operation that is obtained by a multiplication of one matrix of a check matrix with a size of M × N and a generator matrix with a size of M × N which are determined from a linear code for error correction by a vector in a case in which the random number r_{(M)} is the vector having M components, the multiplication being performed through addition based on an exclusive OR; and
an outputting process of a bit value whose number is larger than M bits out of N bits of the random number s_{(N)}.
